# EUROPEAN PATENT SPECIFICATION

(11) **EP 4 271 193 B1**
(45) Date of publication and mention of the grant of the patent: **19.08.2026**
(21) Application number: 21844255.6
(22) Date of filing: 21.12.2021
(51) Int. Cl.: A23F 3/12, A23F 3/18, A23F 3/30, A23F 3/34

(54) **BEVERAGE COMPOSITIONS, METHODS OF MAKING BEVERAGE COMPOSITIONS AND METHODS OF PREPARING BEVERAGES**
GETRÄNKEZUSAMMENSETZUNGEN, VERFAHREN ZUR DEREN HERSTELLUNG UND VERFAHREN ZUR ZUBEREITUNG VON GETRÄNKEN
COMPOSITIONS DE BOISSONS, METHODES DE PREPARATION DE CES COMPOSITIONS ET METHODES DE PREPARATION DE BOISSONS

(30) Priority: 30.12.2020 GB 202020705
(43) Date of publication of application: 08.11.2023
(73) Proprietor: Koninklijke Douwe Egberts B.V., 3532 AD Utrecht (NL)
(72) Inventor: IMISON, Thomas, Maidenhead, Berkshire SL6 6RJ (GB); PAWLEY, Rebekah Joy Pawley, Banbury, Oxfordshire OX16 2QU (GB)
(74) Representative: Wilson Gunn
(86) International application number: PCT/EP2021/087039
(87) International publication number: WO 2022/144241

(56) References cited:
- WO-A2-2020/161740
- CN-U- 201 525 598
- JP-A- 2004 097 015
- US-A1- 2003 091 718
- US-A1- 2019 343 142

## Description

### Technical Field of the Invention

The present invention relates to beverage compositions, methods of making the same and methods of preparing beverages from beverage compositions.

### Background to the Invention

It is well known that beverages can be made by dissolving, extracting or suspending beverage ingredients in a solvent such as water. Some typical known ingredients are tea leaves, roasted coffee beans, gingko, lemon balm, varieties of mint, berries, fruits and other flavoured plant materials either alone or in blends with other plant materials and/or other beverage ingredients such as sweeteners or thickeners. When blends of ingredients are used to prepare beverage compositions, problems can arise related to the relative extraction and dissolution speeds of the different ingredients and care must be taken to adjust the relative amounts and physical properties of the ingredients in order to achieve the desired balance of each ingredient in the final beverage.

Typically, beverages are prepared in this way using hot (80-100°C water) although, in recent years, there has been a trend to preparing beverages using cool or cold water (30°C and below). At colder temperatures, the extraction and dissolution behaviour of beverage ingredients is generally slower and the differences in extraction/dissolution rate are amplified. The extraction and dissolution rate of some beverage ingredients is reduced to such a degree that some ingredients and blends are not viable in cold applications within a reasonable amount of time or some blends of ingredients become incompatible, especially if one ingredient is particularly difficult to extract and others in the blend are readily extracted.

The preparation of tea or herbal leave material for cold extraction is described is e.g., US 2003/091718 A1 and JP 2004/097015 A.

It would be advantageous to provide beverage compositions with at least one improved property, such as overall flavour, flavour balance, colour and/or speed of extraction, when extracted in cold water.

It would be advantageous to provide beverage compositions with improved beverage preparation time in cold water applications. Particularly with improved quality of the prepared beverage in a reduced preparation time in cold water applications.

It is an aim of embodiments of the invention to provide beverage compositions comprising blends of ingredients with improved properties for the preparation of beverages in cold water (water that is colder than about 30°C).

The total extraction and/or dissolution in cold water of some beverage ingredients is impacted more than other beverage ingredients. Furthermore, as there is often a blend of individual compounds within a given beverage ingredient, the particular composition of ingredients extracted in cold water vs hot water is markedly different for some beverage ingredients compared to others. So, it is not just the total extraction of ingredients that must be considered when creating a beverage composition for use with cold water but the extent of extraction/dissolution of each individual compound within each beverage ingredient, affecting the quality of the prepared beverage.

It is an aim of embodiments of the invention to provide a blend of beverage ingredients with improved total extraction/dissolution in cold applications, improved blend of individual beverage ingredients in the prepared beverage and/or improved quality of the prepared beverage.

In general, beverage compositions comprising beverage ingredients that require extraction and/or dissolution to prepare a beverage may be packed in filter bags, such as tea bags, for ease of consumer use and portion sizing. In such applications, the particle size of beverage ingredients and/or pore size of the filter bag are important in ensuring that extraction/dissolution fluid can enter the filter bag and that insoluble beverage ingredients are mostly contained within the filter bag.

It would be advantageous to provide a beverage composition comprising beverage ingredients, with any one or more of the above-referenced extraction benefits, enclosed in a filter bag, wherein extraction water can freely enter the filter bag and significant quantities of insoluble components of the beverage ingredients remain within the filter bag during beverage preparation.

It is therefore an aim of embodiments of the invention to mitigate or reduce a disadvantage presented by the prior art.

### Summary of the Invention

According to a first aspect of the invention there is provided a beverage composition comprising at least one ingredient selected from the group comprising green tea leaves, mint leaves, black tea leaves and lemon balm leaves having a particle size D10 of between 250 and 700 µm wherein;
the green tea leaves have a particle size D50 of less than 1500 µm;
the mint leaves have a particle size D50 of less than 1500 µm;
the black tea leaves have a particle size D50 of less than 1000 µm; and
the lemon balm leaves have a particle size of less than 1500 µm;
wherein the sphericity of the particles of green tea leaves, mint leaves, black tea leaves and/or lemon balm leaves, as measured by the method provided later in the present description, is less than 0.8.

In some preferred embodiments, the particle size D10 of the tea leaves is between 250 and 675 µm, between 250 and 650 µm, between 275 and 700 µm, between 275 and 675 µm, or between 275 and 650 µm.

In some embodiments where the beverage composition comprises green tea leaves, the particle size D50 is between 900 and 1500 µm, between 1000 and 1500 µm, between 1100 and 1500 µm, or between 1200 and 1500 µm.

In some embodiments where the beverage composition comprises mint tea leaves, the particle size D50 is between 500 and 1500 µm, between 750 and 1500 µm, between 1000 and 1500 µm, or between 1200 and 1500 µm.

In some embodiments where the beverage composition comprises black tea leaves, the particle size D50 is between 350 and 1000 µm, between 450 and 1000 µm, between 550 and 1000 µm, or between 600 and 1000 µm.

In some embodiments where the beverage composition comprises lemon balm tea leaves, the particle size D50 is between 850 and 1500 µm, between 850 and 1400 µm, between 900 and 1500 µm, between 900 and 1400 µm, between 1000 and 1500 µm, between 1100 and 1500 µm, or between 1100 and 1400 µm.

It will be understood that each ingredient (green tea leaves, black tea leaves, mint leaves or lemon balm leaves) has been milled or ground such that the ingredient is in granule or particulate form, having the required D10.

In some embodiments, the beverage composition of the first aspect of the invention further comprises a beverage ingredient that is more soluble in water than the ingredient or ingredients selected from particles of green tea leaves, mint leaves, black tea leaves and/or lemon balm leaves. In preferred embodiments, the more soluble beverage ingredient is soluble in water. In preferred embodiments, the more soluble beverage ingredient comprises a flavouring agent, sweetening agent such as an artificial sweetener or sugar, an instant tea or coffee composition such as spray dried coffee or tea, or combinations thereof.

In further embodiments, the beverage composition is between 15 wt.% - 100 wt.% green tea leaves, black tea leaves, mint leaves and/or lemon balm leaves, or between 20 wt.% - 100 wt.%, 30 wt.% - 100 wt.%, 50 wt.%-100 wt.% or 20 wt.% - 70 wt.% of the beverage composition.

In some embodiments, the sphericity of the particles of green tea leaves, mint leaves, black tea leaves and/or lemon balm leaves is less than 0.77 or preferably less than 0.75.

Lower sphericity has the additional advantage of increased surface area and improved extraction.

According to a second aspect of the invention there is provided a filter bag containing the beverage composition of the first aspect of the invention.

In some embodiments the filter bag has a pore size of between 50 and 250 microns, between 50 and 200 microns, between 50 and 150 microns or between 50 and 100 microns.

In some embodiments, the filter bag is a tea bag. Preferably a biodegradable or compostable tea bag. Known suitable tea bag materials are filter papers; food grade polymers such as nylon or PLA; cotton silk; and cotton.

According to a third aspect of the invention there is provided a method of making a beverage by extracting at least a portion of the beverage composition of either of the first aspect of the invention, or extracting at least a portion of the beverage composition located within the filter bag of the second aspect of the invention, in water of not more than 35°C, preferably of not more than 30°C, 21°C, 10°C or 5°C.

In some embodiments, at least a portion of the beverage composition is extracted in water of between 1°C and 30°C, preferably between 3°C and 25°C or between 5°C and 21°C. In some embodiments, the beverage composition is only extracted in water of not more than 30°C, preferably of not more than 21°C, 10°C or 5°C. In some embodiments the beverage composition is only extracted in water of between 1°C and 30°C, preferably between 3°C and 25°C or between 5°C and 21°C.

In some embodiments at least 40% of the extractable content of the or each ingredient selected from green tea, mint, black tea and/or lemon balm is extracted within 1 minute, preferably at least 50% of the extractable content of the or each ingredient selected from green tea, mint, black tea or lemon balm is extracted within 1 minute.

This extent of extraction is measured by taking the Chroma value for the green tea, black tea, mint and/or lemon balm component of the beverage composition after 240 minutes in 90°C water as extraction of all of the extractable content (100% extraction).

According to a fourth aspect of the invention there is provided a method of making the beverage composition of the first aspect of the invention comprising grinding at least one ingredient selected from the group comprising green tea leaves, mint leaves, black tea leaves and/or lemon balm leaves to a particle size D10, of between 250 and 700 µm and blending with at least one further beverage ingredient.

In some embodiments, the further beverage ingredient or ingredients is/are more soluble in water than the green tea, mint, black tea and/or lemon balm. Preferably, the or each further beverage ingredient is a flavour.

In preferred embodiments, the grinding is performed on a smooth roller mill.

A smooth roller mill has the additional advantage of providing low sphericity of the resultant tea ingredient and increasing surface area for extraction.

In some embodiments, the beverage composition is subsequently loaded into a filter bag. In some embodiments the filter bag has a pore size of between 50 and 250 microns, 50 and 200 microns, 50 and 150 microns or between 50 and 100 microns. In preferred embodiments, the filter bag is a tea bag, preferably a biodegradable or compostable tea bag. The filter bag may be as described and defined hereinabove for the second aspect of the invention.

### Detailed Description of the Invention

In order that the invention may be more clearly understood embodiments thereof will now be described, by way of example only, with reference to the accompanying drawings, of which:
- Figure 1: Graph of the particle size distribution of four different samples of processed green tea leaves
- Figure 2: Graph of sphericity distribution of four different samples of processed green tea leaves

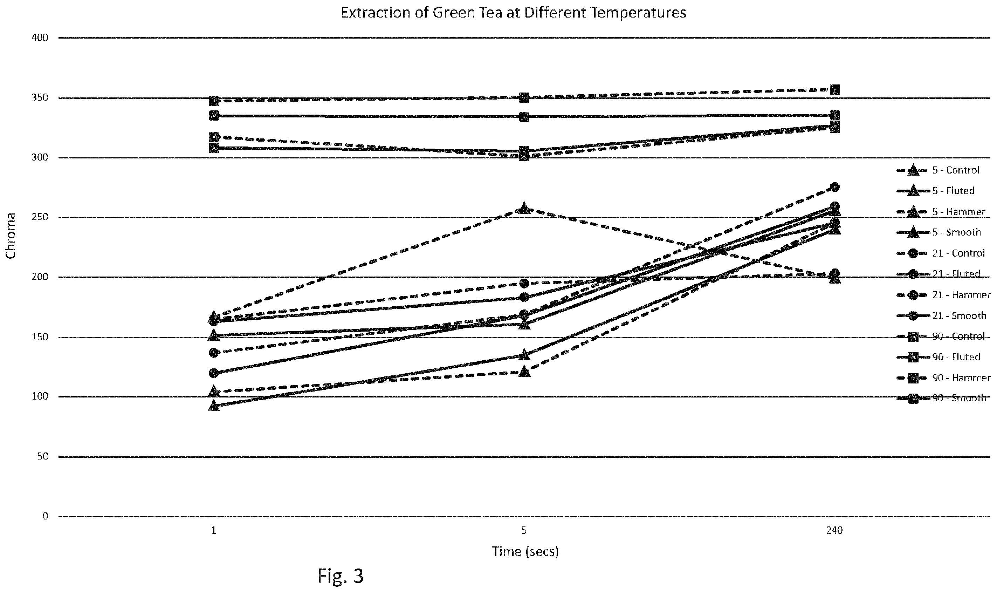

- Figure 3: Graph of the extent of extraction (Chroma) of the four different samples of processed green tea leaves of Figures 1 and 2 in water of different temperatures, over time
- Figure 4: Graph of the particle size distribution of four different samples of processed black tea leaves
- Figure 5: Graph of sphericity distribution of four different samples of processed black tea leaves
- Figure 6: Graph of the extent of extraction (Chroma) of the four different samples of processed black tea leaves of Figures 5 and 6 in water of different temperatures, over time
- Figure 7: Graph of the particle size distribution of four different samples of processed mint tea leaves
- Figure 8: Graph of sphericity distribution of four different samples of processed mint tea leaves
- Figure 9: Graph of the extent of extraction (Chroma) of the four different samples of processed mint tea leaves of Figures 7 and 8 in water of different temperatures, over time
- Figure 10: Graph of the particle size distribution of four different samples of processed lemon balm tea leaves
- Figure 11: Graph of sphericity distribution of four different samples of processed lemon balm tea leaves
- Figure 12: Graph of the extent of extraction (Chroma) of the four different samples of processed lemon balm tea leaves of Figures 10 and 11 in water of different temperatures, over time

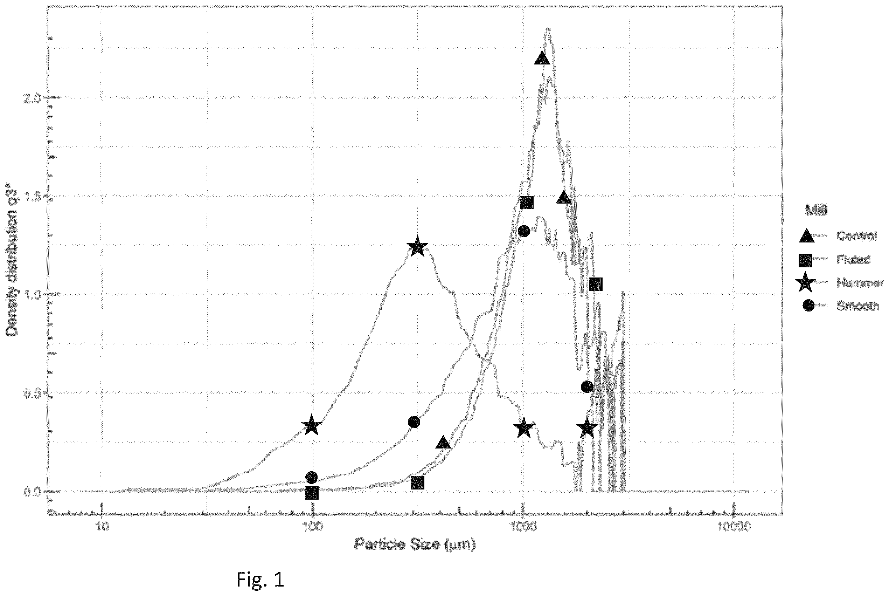

Table 1, below shows the D10, D50, D90 and span of each sample of processed tea leaves from the data used to create the particle size graphs in Figures 1, 4, 7 and 10.

In each case, D10 is the particle size value (in microns, µm) that represents the particle size that 10% of the particles in the sample are smaller than, and can be used as a measure of the amount of fine particles in a sample.

D50 is the particle size value (in microns, µm) in which 50% of the particles in the sample are smaller than, and is the median average particle size of the sample.

D90 is the particle size value (in microns, µm) in which 90% of the particles in the sample are smaller than.

**Table 1: D10, D50 and D90 of the samples of processed tea leaves**

| *Ingredient and grinding method* | *D10 (µm)* | *D50 (µm)* | *D90 (µm)* |
|---|---|---|---|
| *Mint tea - control* | 853 | 1525 | 2784 |
| *Mint tea - fluted roller mill* | 896 | 1569 | 2780 |
| *Mint tea - smooth roller mill (of the invention)* | **580** | **1436** | **2922** |
| *Mint tea - hammer mill* | 189 | 419 | 1176 |
| *Lemon balm tea - control* | 826 | 1398 | 2502 |
| *Lemon balm tea - fluted roller mill* | 883 | 1521 | 3290 |
| ***Lemon balm tea - smooth roller mill (of the invention)*** | **541** | **1314** | **3176** |
| *Lemon balm tea - hammer mill* | 218 | 814 | 3477 |
| *Black tea - control* | 814 | 1220 | 1810 |
| *Black tea - fluted roller mill* | 757 | 1177 | 1776 |
| ***Black tea - smooth roller mill (of the invention)*** | **291** | **794** | **1738** |
| *Black tea - hammer mill* | 153 | 296 | 575 |
| *Green tea - control* | 856 | 1545 | 2985 |
| *Green tea - fluted roller mill* | 878 | 1573 | 3021 |
| ***Green tea - smooth roller mill (of the invention)*** | **643** | **1467** | **2828** |
| *Green tea - hammer mill* | 238 | 842 | 2754 |

### Examples

### Methods

### Particle Size and Shape method:

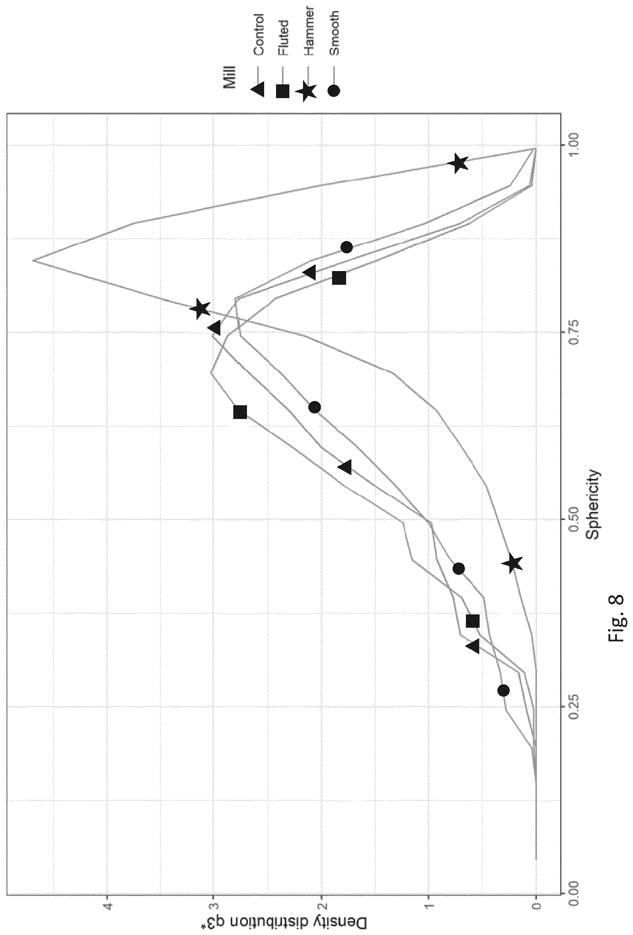

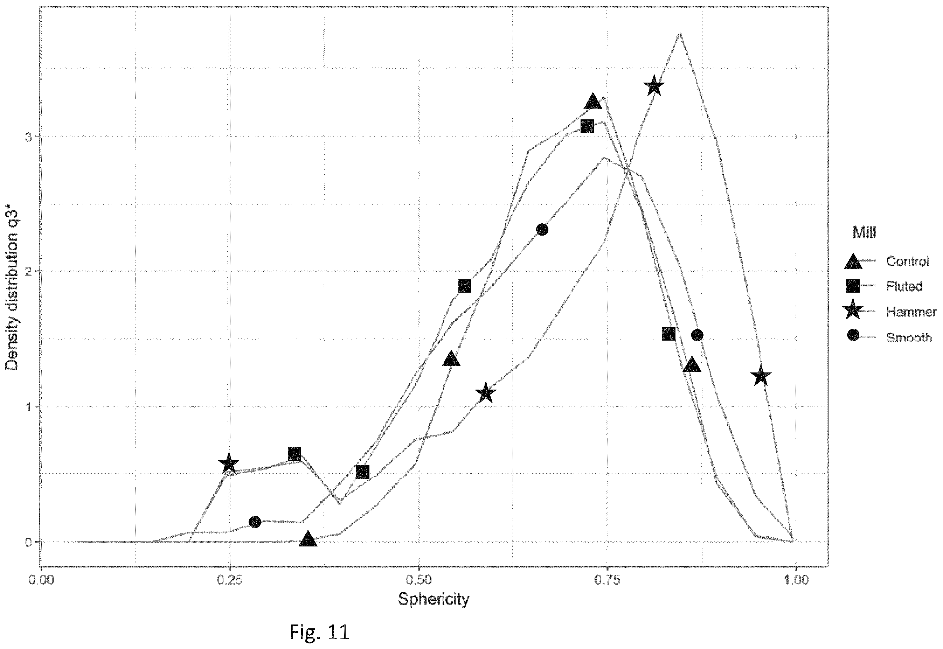

To generate the data in Figures 1, 2, 4, 5, 7, 8, 10 and 11, a QICPIC instrument (Sympatec) with a RODOS module was used to measure particle size. This technique utilises dynamic image analysis to measure particle size and shape. Particles are dispersed within the measuring area using compressed air, such that no particles are overlapping. The particles are illuminated using a pulsed laser light source. Shadow images of the particles are recorded and analysed.

Sphericity is calculated by the QICPIC instrument. The sphericity, S, is the ratio of the perimeter of the equivalent circle, P_{EQPC}, to the real perimeter, Pᵣₑₐₗ. The result is a value between 0 and 1. The smaller the value, the more irregular is the shape of the particle. This results from the fact that an irregular shape causes an increase of the perimeter. The ratio is always based on the perimeter of the equivalent circle because this is the smallest possible perimeter with a given projection area.

In this case, P_{EQPC} is the diameter of a circle that has the same area as the projection area of the particle. It is widely used for the evaluation of particles sizes from the projection area of a non-spherical particle. Pᵣₑₐₗ is the measures perimeter of the particle.

### Brewing method:

To brew the tea, 2.5 g of beverage ingredient was weighed into a plastic bottle. 200 g of water was pre-prepared to the desired temperature by either heating in a water bath at 90 °C, storing the water at ambient temperature for 24 hours to achieve 21 °C, or chilling in a fridge to 4 °C. This water was poured onto the beverage ingredient, the cap added, and the bottle inverted twice to ensure all the beverage ingredient was fully wetted. After the requisite time (1, 5, or 240 minutes) the sample was filtered through 17 - 30 µm filter paper into a second plastic bottle.

For samples brewed for 240 minutes the brewing temperature was maintained by keeping samples in a 90 °C water bath, ambient temperature, or in a fridge for the brewing duration. Following brewing all samples were transferred to, and stored in, a fridge.

### Colour (Chroma) method:

Colour measurements were obtained using a Konica Minolta CM-5 instrument in transmission mode. The results are for a 10° observer and D65 illuminant. White light is passed through a sample in a cuvette. The spectrum of the transmitted light is measured. This is compared to the spectrum transmitted by a sample of distilled water and the absorbance spectrum of the sample is calculated. This is used to calculate the perceived visual colour on the CIELAB scale.

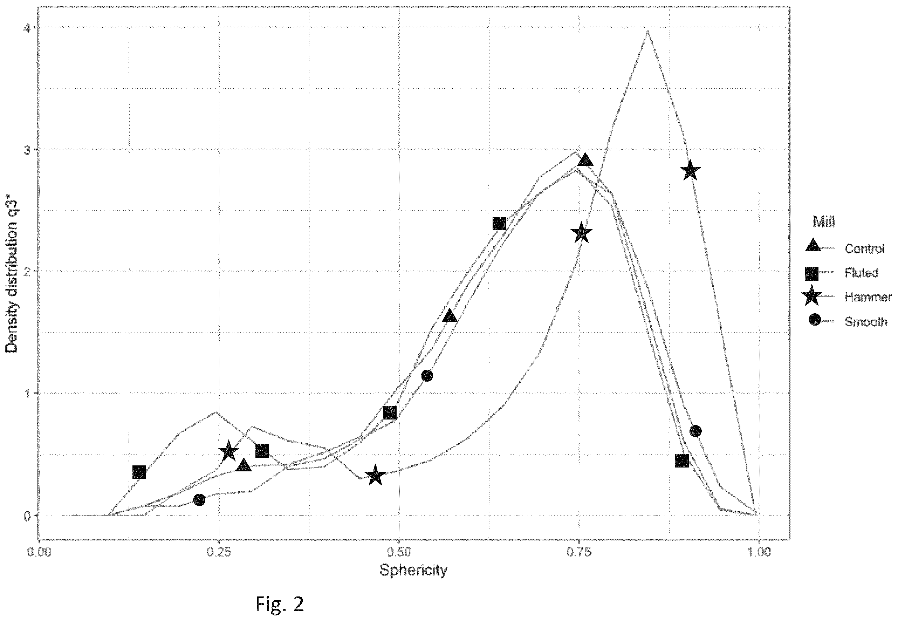

For this work, a path length of 20 mm was used. Longer path lengths result in greater absorbance and a more intense colour. The results shown in Figures 2, 5, 8 and 11 are mean values from duplicate samples.

A change in L*, a*, and b* measurements indicates a change in colour of the sample, with each of the three values corresponding to the following:
L*: Lightness, on a scale of 0 (black) to 100 (white)
a*: Green to red variation on a scale of -100 to +100.
b*: Blue to yellow variation on a scale of -100 to +100.

Colour, specifically Chroma, correlates to the concentration of tea extracted from the beverage composition and so change in colour is indicative of extraction rate and the maximum value of Chroma is indicative of the maximum extract possible for a given system of ingredient and solvent.

Chroma (C*) is a useful value that can be calculated from the measured L*, a*, b* values as: $C * = √ \left(a{*}^{2}+b{*}^{2}\right)$ Chroma is a measure of the intensity of the colour.

### Example 1 - Green tea

Samples of a control of powdered green tea leaves were milled using each three different milling techniques: a hammer mill with a 500 µm mesh, and a roller mill with either smooth or fluted rollers. Samples of the hammer milled, smooth roller milled, fluted roller milled green tea leaves and the control powdered green tea leaves were assessed for particle size distribution and shapes, by the methods above, as shown in Figures 1 and 2. The sample of green tea prepared using the smooth roller mill is of the invention, each of the other samples of green tea fall outside the scope of the invention.

With reference to Figures 1 and 2, the fluted mill showed very little impact on the particle size distribution vs control. The hammer mill had the largest impact on the particle size distribution from the control, giving considerably smaller particles (modal size ~300 µm vs ~ 1300 µm for the control). These very small particles are known to have a negative impact of beverage performance and quality both blocking the pores in tea bags, inhibiting extraction and complicating manufacturing with the handling of such fines. The hammer mill also produced considerably more rounded particles than the other milled varieties on average, although it showed a small peak of particles with low sphericity. The smooth roller mill gave an intermediate particle size distribution, with smaller particles than the control and fluted roller mill but larger D10 particle size than the hammer mill sample. The smooth roller mill had very little impact on the particle shape.

With reference to Table 1, the Green tea leaves processed by smooth roller mill (of the invention) showed a D10 of 643 µm (which is significantly higher than the D10 for the hammer milled sample) and a D50 of 1467µm (a lower median particle size than either the control or fluted roller mill samples)

Samples of tea beverages produced from each sample of processed green tea leaves were prepared by the Brewing method above to produce a tea beverages of hammer-milled green tea leaves, smooth roller milled green tea leaves and fluted roller milled green tea leaves alongside a tea beverage of control powdered green tea leaves.

A sample of each tea beverage was then subjected to colour measurement by the Colour (Chroma) method above. With reference to Figure 2, the chroma of the brewed green tea changed with brewing time and temperature. The chroma increased significantly with increasing brewing temperature, indicating more intense colour for the hotter brewed teas. There is little difference in the chroma of samples brewed for 1 and 5 minutes, although it is higher in the 240 minutes samples, suggesting that the extraction of some coloured compounds of green tea is a slow process. This is especially true for samples brewed at 4 °C and 21 °C. At these lower temperatures milling had a significant an impact, with higher chroma seen in the hammer milled sample and smooth roller milled sample of the invention compared to the control and fluted milled samples. These differences are less significant at longer brew times, interestingly this difference is negated at 240 minutes, suggesting that the maximum available chroma is achieved regardless of milling method and highlighting the scope for tuning the brew time, milling method/particle size distribution and shape and extraction temperature.

### Example 2 - Black tea

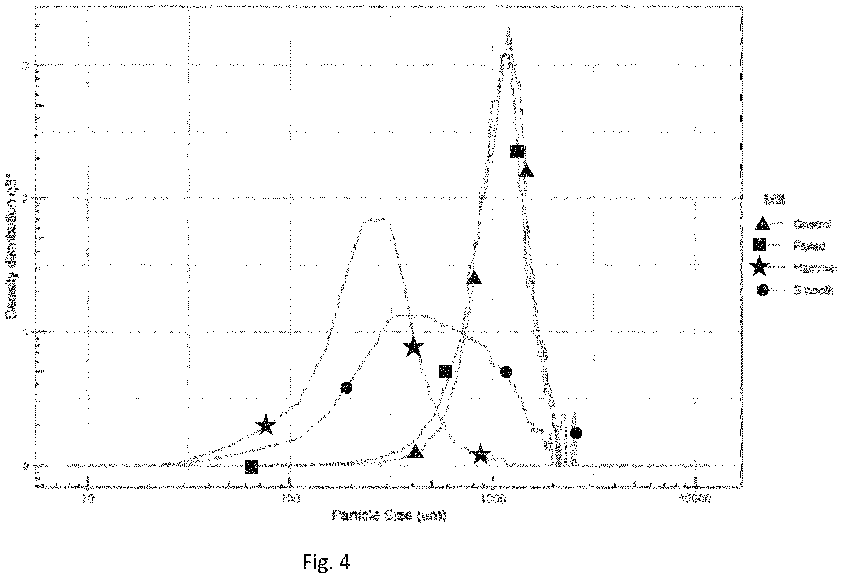

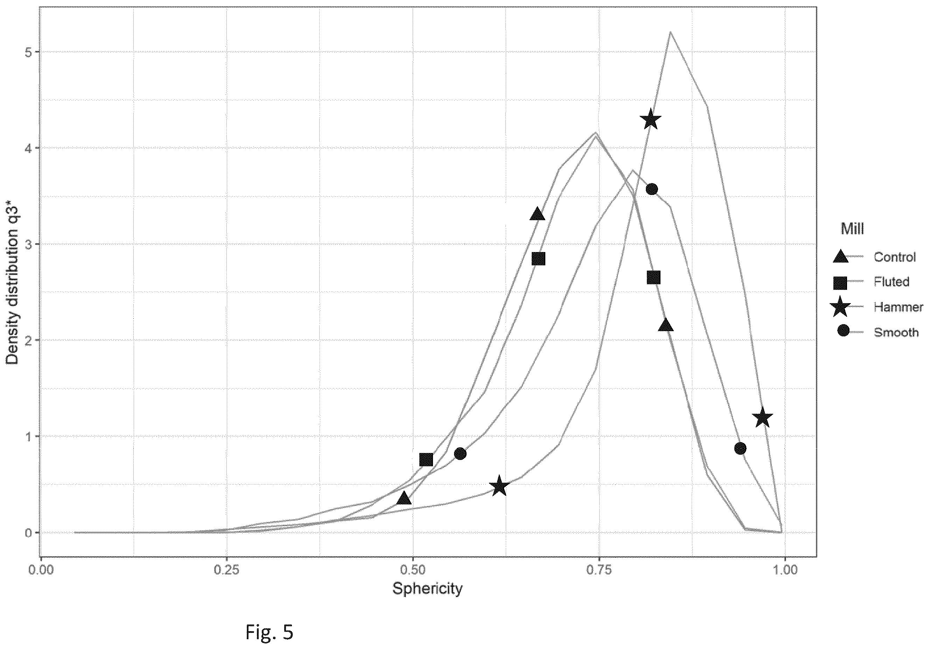

Samples of a control of powdered black tea leaves were milled using each three different milling techniques and analysed for particle size and shape, as in Example 1, with results as shown in Figures 4 and 5.

The resulting particle size analysis showed a similar change to that seen in Example 1, the hammer mill had the largest impact on particle size and shape, reducing it significantly and increasing the sphericity of the particles. The fluted roller mill had little effect over control and the smooth roller mill generated an intermediate particle size, larger D10 particle size than the hammer mill sample and had little effect on the sphericity distribution vs control.

With reference to Table 1, the Black tea leaves processed by smooth roller mill (of the invention) showed a D10 of 291 µm (which is significantly higher than the D10 for the hammer milled sample) and a D50 of 794µm (a lower median particle size than either the control or fluted roller mill samples)

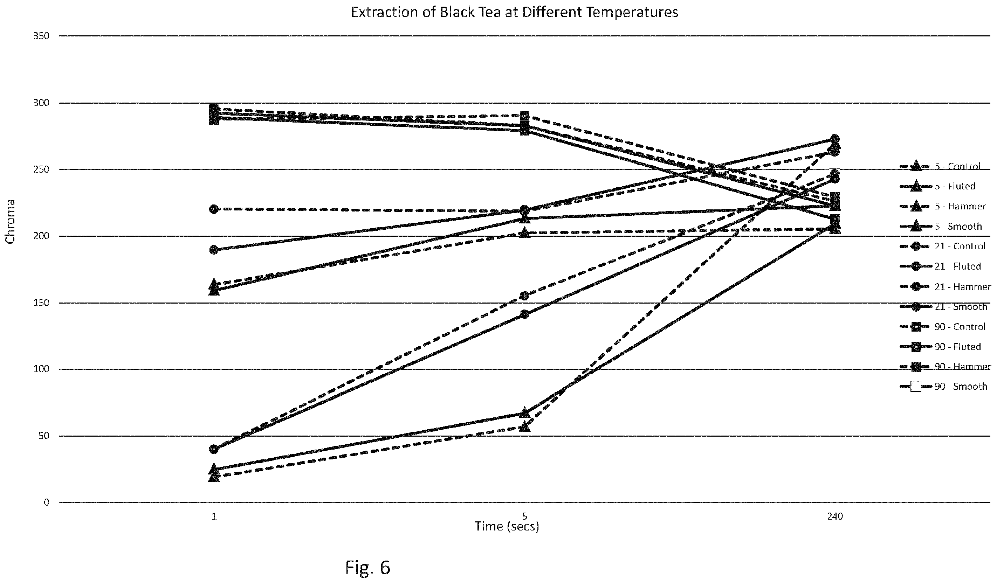

As in Example 1, samples of each type of processed black tea leaves were then brewed to create samples of tea beverage and the black tea beverages were subjected to colour analysis showing broadly the same results (shown in Figure 6) as in Example 1, with the hammer milled and smooth roller milled samples showing better extraction than the control and fluted roller milled samples, especially at lower temperatures and shorter time periods.

### Example 3 - Mint tea

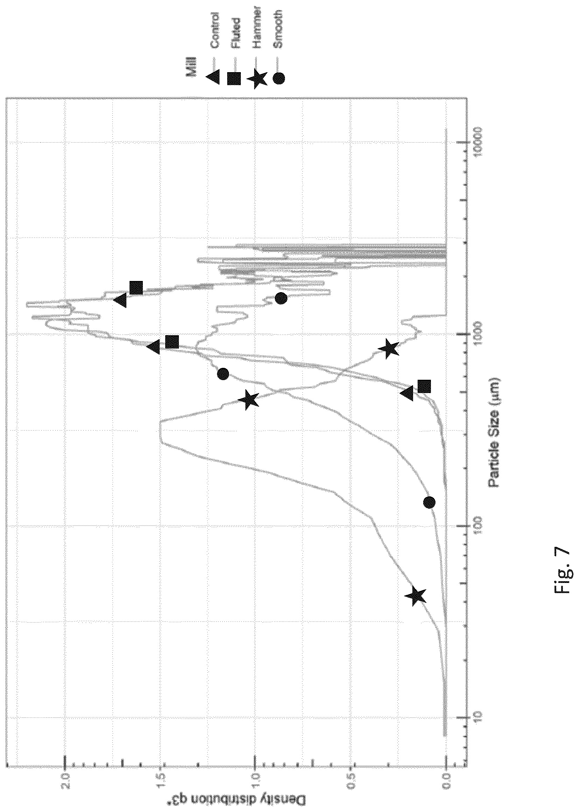

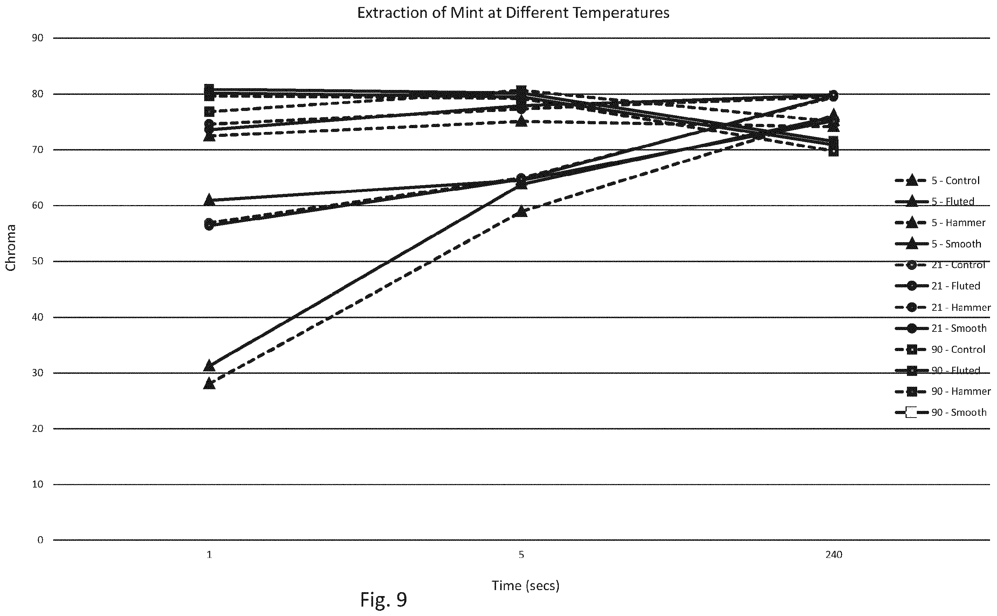

Samples of processed mint tea leaves and mint tea beverages were produced in the same way as Examples 2 and 2 with results for particle size and shape distribution of the ingredient and beverage colour shown in Figures 7, 8, 9 and Table 1.

The particle size analysis showed a similar change to that seen in Examples 1 and 2, the hammer mill having the largest impact on particle size and shape, reducing it significantly and increasing the sphericity of the particles. The fluted roller mill had little effect vs control and the smooth roller mill generated an intermediate particle size, larger D10 particle size than the hammer mill sample and had little effect on sphericity distribution vs control.

With reference to Table 1, the Mint tea leaves processed by smooth roller mill (of the invention) showed a D10 of 580µm (which is significantly higher than the D10 for the hammer milled sample) and a D50 of 1436µm (a lower median particle size than either the control or fluted roller mill samples).

### Example 4 -Lemon balm tea

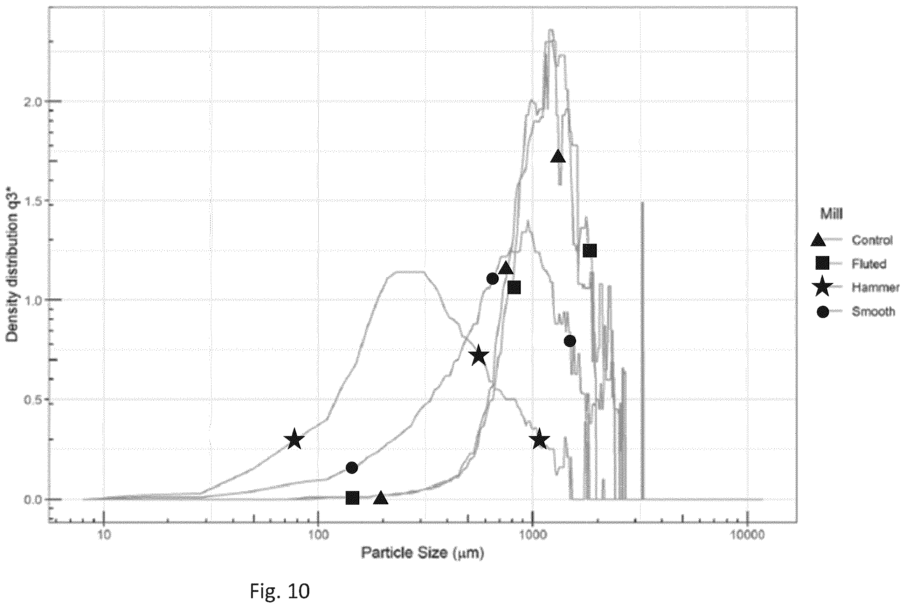

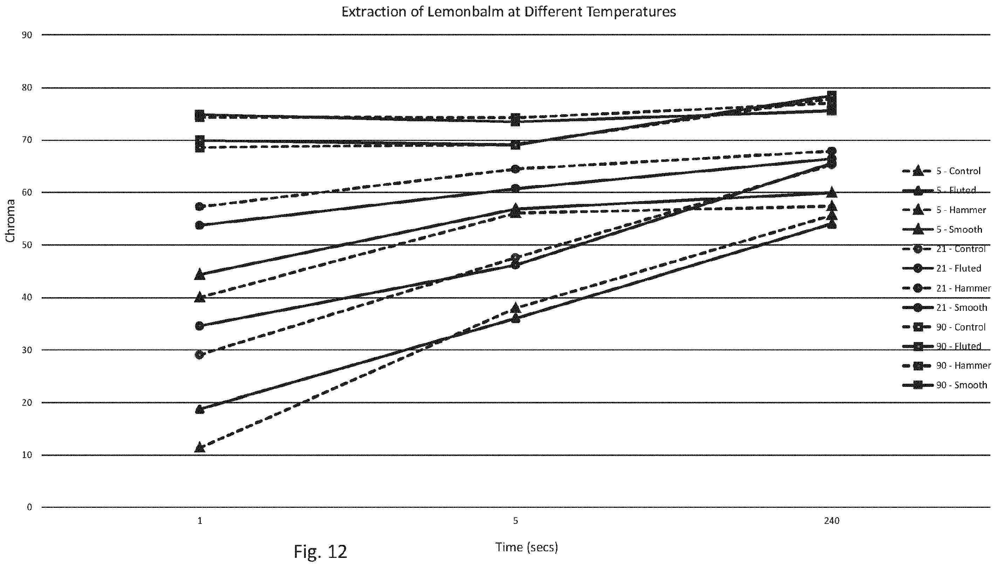

Samples of processed lemon balm tea leaves and lemon balm tea beverages were produced in the same way as Examples 1, 2, and 3 with results for particle size and shape distribution of the ingredient and beverage colour shown in Figures 10, 11, 12 and Table 1.

The particle size analysis showed a similar change to that seen in Examples 1, 2 and 3, the hammer mill having the largest impact on particle size and shape, reducing it significantly and increasing the sphericity of the particles. The fluted roller mill had little effect vs control and the smooth roller mill generated an intermediate particle size, with larger D10 particle size than the hammer mill sample and had little impact on sphericity distribution.

### Example 5 - Tea blends

2.5g blends of tea ingredients were prepared and loaded into commercially available tea bags with mesh size of 50-100 microns, with recipes as shown below.

Recipe 1: Lemon balm leaves (smooth roller milled) 25wt.%, Lemongrass 25wt.%, Dandelion leaf 15wt.%, Sweet blackberry leaves 15wt.%, Rosehips 10wt.%, Fennel 3wt.%, Star anise 5wt.%, Natural lemon flavouring 2wt.%.

Recipe 2: Black tea leaves (smooth roller milled) 60wt.%, Rhubarb 1wt.%, Raspberry 2wt.%, Sweet blackberry leaves 5wt.%, Rosehips 22wt.%, Hibiscus 5wt.%, Natural rhubarb flavouring 1wt.%, Natural raspberry flavouring 5wt.%.

Recipe 3: Green tea leaves (smooth roller milled) 50wt.%, Peach pieces 1wt.%, Sweet blackberry leaves 10wt.%, Rosehips 13wt.%, Hibiscus 15wt.%, Elderflower 1wt.%, Natural peach flavouring 5wt.%, Natural elderflower flavouring 5wt.%.

Recipe 4: Chamomile 55wt.%, Lemon balm leaves (smooth roller milled) 20wt.%, Lemon pieces 5wt.%, Sweet blackberry leaves 15wt.%, Natural lemon flavouring 5wt.%.

Recipe 5: Black tea leaves (smooth roller milled) 50wt.%, Blueberry 1wt.%, Cranberry juice granules 1wt.%, Sweet blackberry leaves 10wt.%, Rosehips 8wt.%, Hibiscus 20wt.%, Natural blueberry flavouring 5wt.%, Natural cranberry flavouring 5wt.%.

Recipe 6: Green tea leaves (smooth roller milled) 65wt.%, Mint (smooth roller milled) 15wt.%, Lemongrass 10wt.%, Lemon peel 5wt.%, Natural flavourings 5wt.%.

Recipe 7: Green tea leaves (smooth roller milled) 70wt.%, Vanilla granules 2wt.%, Pear pieces 3wt.%, Sweet blackberry leaves 15wt.%, Natural pear flavouring 5wt.%, natural vanilla flavouring 5wt.%.

Each one of recipes 1-7 was extracted with 200ml of 4°C water for 1 minute and the resultant beverages taste tested by a tasting panel against commercially available equivalent tea blends brewed in the same way.

The commercially available control teas were Ti Ora brand: "Herbal lemongrass, dandelion and fennel", "Fruit infused peach and apple", "Black tea with berries and blackcurrant", "Black tea with lemon", "Chamomile and honey", "Peppermint and lemon", "Green tea, peppermint and kiwifruit", "Green tea, ginger and passionfruit" and "Green tea, passionfruit and peach".

The tasting panel reported an improved flavour of each of the recipes of the invention (Recipes 1-7) over the commercially available samples. After extraction at 4°C for 1 minute, the tasting panel reported that the commercially available teas had overall less flavour and markedly less flavour of green tea, black tea, mint and lemon balm as compared to Recipes 1-7 of the invention.

Without wishing to be bound by theory, the inventors believe that the optimised milling method, particle size and/or shape distribution of these four key and often difficult to extract ingredients and/or the recipe formulation of the inventive recipes created a more extracted and improved flavoured product when brewed under these challenging extraction conditions. The inventors believe that the smooth roller milled samples of green tea leaves, black tea leaves, mint tea leaves and lemon balm leaves performed the best due to their D10 particle size. especially (but not exclusively) when combined with their D50 particle size, indicating the optimum small particle size with low levels of fines, reduced sphericity (vs hammer milling) allowing for improved extraction, particularly at low temperatures and shorter extraction times, without the processing impediments associated with handling large amounts of fines (as with the hammer milled sample) or the risk of those fine particles blocking the pores of a tea bag when the consumer uses such a product in a tea bag format. Further, the smooth roller milled green tea leaves, mint, black tea leaves and/or lemon balm leaves proved to provide sufficient good quality flavour to balance the flavour of the more readily extractable ingredients in each of Recipes 1-7. Whilst smooth roller-milling provided the inventive products in the above Examples, it is also possible to utilise different milling techniques to achieve the required D10 (and D50) particle sizes, by using appropriate conditions and parameters, and so smooth roller milling, while preferred, and providing advantages over hammer and flute milling, is not essential.

The above embodiment is/embodiments are described by way of example only.

## Claims

1. A beverage composition comprising an ingredient selected from the group comprising green tea leaves, mint leaves, black tea leaves and lemon balm leaves, wherein the ingredient has a particle size D10 of between 250 and 700 µm wherein;
the green tea leaves have a particle size D50 of less than 1500 µm;
the mint leaves have a particle size D50 of less than 1500 µm;
the black tea leaves have a particle size D50 of less than 1000 µm; and
the lemon balm leaves have a particle size of less than 1500 µm;
wherein the sphericity of the particles of green tea leaves, mint leaves, black tea leaves and/or lemon balm leaves, as measured by the method provided in the description, is less than 0.8.

2. The beverage composition of claim 1 wherein the composition further comprises a beverage ingredient that is more soluble in water than the green tea, black tea, mint or lemon balm ingredient.

3. A filter bag containing the beverage composition of claim 1 or claim 2.

4. The filter bag of claim 3 wherein the filter bag has a pore size of between 50 and 250 microns.

5. A method of making a beverage by extracting at least a portion of the beverage composition of claim 1 or claim 2 in water of not more than 30°C.

6. The method of claim 5 wherein at least 40% the green tea, mint, black tea or lemon balm ingredient is extracted in less than 1 minute.

7. A method of making the beverage composition of claim 1 or claim 2 comprising grinding the green tea leaves, mint leaves, black tea leaves and/or lemon balm leaves to a particle size D10 of between 250 and 700 µm and blending with at least one other beverage ingredient.

8. The method of claim 7 wherein the other beverage ingredient is more soluble in water than the black tea, green tea, mint or lemon balm component.

9. The method of claim 7 or 8 wherein the grinding is performed on a smooth roller mill.

10. The method of any one of claims 7 to 9 wherein the beverage composition is subsequently loaded into a filter bag.

11. The method of claim 10 wherein the filter bag has a pore size of between 50 and 250 microns.

## Patentansprüche

1. Getränkezusammensetzung, umfassend einen Inhaltsstoff, ausgewählt aus der Gruppe, umfassend Grünteeblätter, Minzblätter, Schwarzteeblätter und Zitronenmelissenblätter, wobei der Inhaltsstoff eine Partikelgröße D10 von zwischen 250 und 700 µm aufweist, wobei;
die Grünteeblätter eine Partikelgröße D50 von weniger als 1500 µm aufweisen;
die Minzblätter eine Partikelgröße D50 von weniger als 1500 µm aufweisen;
die Schwarzteeblätter eine Partikelgröße D50 von weniger als 1000 µm aufweisen; und die Zitronenmelissenblätter eine Partikelgröße von weniger als 1500 µm aufweisen;
wobei die Sphärizität der Partikel von Grünteeblättern, Minzblättern, Schwarzteeblättern und/oder Zitronenmelissenblättern, gemessen durch das in der Beschreibung bereitgestellte Verfahren, weniger als 0,8 beträgt.

2. Getränkezusammensetzung nach Anspruch 1, wobei die Zusammensetzung ferner einen Getränkeinhaltsstoff umfasst, der in Wasser löslicher ist als der Grüntee-, Schwarztee-, Minz- oder Zitronenmelisseninhaltsstoff.

3. Filterbeutel, enthaltend die Getränkezusammensetzung nach Anspruch 1 oder 2.

4. Filterbeutel nach Anspruch 3, wobei der Filterbeutel eine Porengröße zwischen 50 und 250 Mikrometer aufweist.

5. Verfahren zur Herstellung eines Getränks durch Extrahieren mindestens eines Teils der Getränkezusammensetzung nach Anspruch 1 oder 2 in Wasser von nicht mehr als 30 °C.

6. Verfahren nach Anspruch 5, wobei mindestens 40 % des Grüntee-, Minz-, Schwarztee- oder Zitronenmelisseninhaltsstoffs in weniger als 1 Minute extrahiert werden.

7. Verfahren zur Herstellung der Getränkezusammensetzung nach Anspruch 1 oder 2, umfassend das Mahlen der Grünteeblätter, Minzblätter, Schwarzteeblätter und/oder Zitronenmelissenblätter auf eine Partikelgröße D10 zwischen 250 und 700 µm und das Mischen mit mindestens einem anderen Getränkeinhaltsstoff.

8. Verfahren nach Anspruch 7, wobei der andere Getränkeinhaltsstoff in Wasser löslicher ist als die Schwarztee-, Grüntee-, Minz- oder Zitronenmelissenkomponente.

9. Verfahren nach Anspruch 7 oder 8, wobei das Mahlen durch eine glatte Walzenmühle durchgeführt wird.

10. Verfahren nach einem der Ansprüche 7 bis 9, wobei die Getränkezusammensetzung anschließend in einen Filterbeutel gefüllt wird.

11. Verfahren nach Anspruch 10, wobei der Filterbeutel eine Porengröße zwischen 50 und 250 Mikrometer aufweist.

## Revendications

1. Composition de boisson comprenant un ingrédient choisi dans le groupe comprenant feuilles de thé vert, feuilles de menthe, feuilles de thé noir et feuilles de mélisse, dans laquelle l'ingrédient a une taille de particules D10 comprise entre 250 et 700 µm, dans laquelle ;
les feuilles de thé vert ont une taille de particules D50 inférieure à 1500 µm ;
les feuilles de menthe ont une taille de particules D50 inférieure à 1500 µm ;
les feuilles de thé noir ont une taille de particules D50 inférieure à 1000 µm ; et
les feuilles de mélisse ont une taille de particules inférieure à 1500 µm ;
dans laquelle la sphéricité des particules de feuilles de thé vert, feuilles de menthe, feuilles de thé noir et/ou feuilles de mélisse, telle que mesurée par le procédé fourni dans la description, est inférieure à 0,8.

2. Composition de boisson selon la revendication 1, dans laquelle la composition comprend en outre un ingrédient de boisson qui est plus soluble dans l'eau que l'ingrédient de thé vert, de thé noir, de menthe ou de mélisse.

3. Sachet filtrant contenant la composition de boisson selon la revendication 1 ou la revendication 2.

4. Sachet filtrant selon la revendication 3, dans lequel le sachet filtrant a une taille de pores comprise entre 50 et 250 micromètres.

5. Procédé de fabrication d'une boisson par extraction d'au moins une partie de la composition de boisson selon la revendication 1 ou la revendication 2 dans de l'eau ne dépassant pas 30 °C.

6. Procédé selon la revendication 5, dans lequel au moins 40 % de l'ingrédient de thé vert, de menthe, de thé noir ou de mélisse sont extraits en moins de 1 minute.

7. Procédé de fabrication de la composition de boisson selon la revendication 1 ou la revendication 2, comprenant le broyage des feuilles de thé vert, feuilles de menthe, feuilles de thé noir et/ou feuilles de mélisse à une taille de particules D10 comprise entre 250 et 700 µm et leur mélange avec au moins un autre ingrédient de boisson.

8. Procédé selon la revendication 7, dans lequel l'autre ingrédient de boisson est plus soluble dans l'eau que le composant de thé noir, de thé vert, de menthe ou de mélisse.

9. Procédé selon la revendication 7 ou 8, dans lequel le broyage est effectué sur un appareil à cylindres lisses.

10. Procédé selon l'une quelconque des revendications 7 à 9, dans lequel la composition de boisson est ensuite chargée dans un sachet filtrant.

11. Procédé selon la revendication 10, dans lequel le sachet filtrant a une taille de pores comprise entre 50 et 250 micromètres.
